# EUROPEAN PATENT SPECIFICATION

(11) **EP 2 431 418 B1**
(45) Date of publication and mention of the grant of the patent: **27.11.2019**
(21) Application number: 10774987.1
(22) Date of filing: 14.05.2010
(51) Int. Cl.: C08L 77/00, C08K 7/04, C08L 55/02

(54) **RESIN COMPOSITION FOR USE IN COATED MOLDED ARTICLE**
HARZZUSAMMENSETZUNG FÜR BESCHICHTETEN FORMARTIKEL
COMPOSITION DE RÉSINE UTILISABLE DANS UN ARTICLE MOULÉ ENROBÉ

(30) Priority: 15.05.2009 JP 2009119121
(43) Date of publication of application: 21.03.2012
(73) Proprietor: Daicel Polymer Ltd., Tokyo 108-8231 (JP)
(72) Inventor: TAI Toshihiro, Himeji-shi Hyogo 671-1123 (JP); OE Yuichi, Himeji-shi Hyogo 671-1123 (JP)
(74) Representative: Grünecker Patent- und Rechtsanwälte PartG mbB
(86) International application number: PCT/JP2010/058155
(87) International publication number: WO 2010/131730

(56) References cited:
- JP-A- 11 286 587
- JP-A- 2004 131 716
- JP-A- 2005 307 180
- JP-A- 2007 161 940
- JP-A- 2007 224 287
- JP-A- 2009 067 868

## Description

### Technical Field

The present invention relates to a resin composition for use in a coated molded article suitable for use in various molded articles to be used after being coated.

### Background Art

A resin composition formed of a polyamide resin and an ABS resin has been known as a material for an automotive part (JP-A 2007-224287 and JP-A 11-286587). The material for an automotive part is requested to have good coatability as well as mechanical properties such as rigidity and physical properties such as heat resistance.

JP-A 2007-224287 has no description concerning the coatability and merely describes a fibrous filler such as glass fiber as an arbitrary component.

No test for the coatability itself is performed in JP-A 11-286587, and the document merely describes a qualitative test (o and × evaluation mode) for dimensional stability after baking finish. In addition, as in JP-A 2007-224287, the document merely describes a fibrous filler such as glass fiber as an arbitrary component.

JP,A,2009 067868 discloses masterbatch for adding to resin, whilst JP,A,2007 161940 discloses a resin for plaing and painting.

JP-A 2007-224287 discloses compositions comprising a polyamide resin, a maleimide-containing polymer, and glass fibers. JP-A 2005-307180 discloses thermoplastic resin compositions obtained by mixing a filler having a cocoon-shaped cross section into a thermoplastic resin which contains a rubber reinforced resin.

### Summary of Invention

An object of the present invention is to provide a resin composition for use in a coated molded article with which a molded article having good mechanical properties and good physical properties, and having good coatability can be obtained.

The present invention provides a resin composition for use in a coated molded article comprising:
35 to 90 mass% of (A) a polyamide resin;
9 to 50 mass% of (B) an ABS resin;
1 to 25 mass% in total of (C) two or more kinds selected from a carboxylic acid-modified AS resin, a carboxylic acid-modified acrylic resin, a carboxylic acid-modified maleimide resin, a carboxylic acid-modified ABS resin, and a carboxylic acid-modified SEBS resin; and
2 to 80 parts by mass of (D) glass fiber and/or carbon fiber with respect to 100 parts by mass of the total of components (A), (B), and (C).

Preferred embodiments of the present invention are set forth in the dependent claims.

A molded article obtained from the resin composition for use in a coated molded article of the present invention has good mechanical properties such as rigidity and good physical properties such as heat resistance. In addition, the molded article has good adhesiveness with a coating film after its coating.

### Brief Description of Drawings

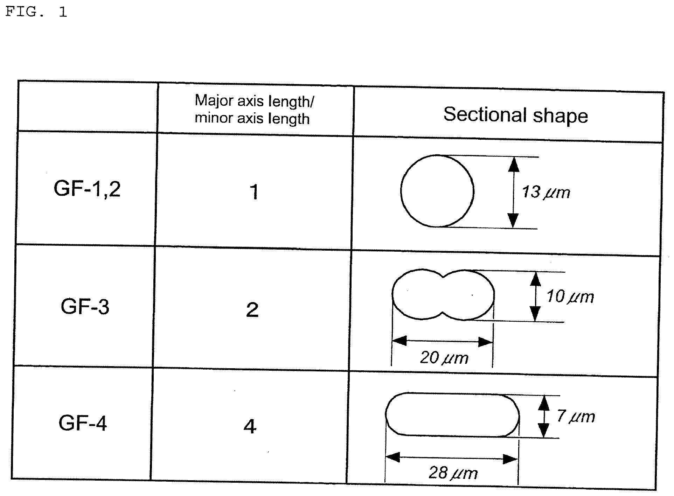

[FIG. 1] A view illustrating a ratio of a major axis length to a minor axis length of each of glass fiber used in examples and the sectional shapes of the fibers.

### Description of Embodiments

### <Component (A)>

A polyamide-based resin as component (A) is exemplified by a polyamide resin formed of a diamine and a dicarboxylic acid, and a copolymer thereof, and specific examples thereof include: nylon 66, polyhexamethylene sebacamide (nylon 6/10), polyhexamethylene dodecanamide (nylon 6/12), polydodecamethylene dodecanamide (nylon 1212), poly-m-xylylene adipamide (nylon MXD6), polytetramethylene adipamide (nylon 46), and mixtures and copolymers thereof; copolymers such as nylon 6/66, nylon 6/6T containing 50 mol% or less of a 6T component (6T: polyhexamethylene terephthalamide), nylon 66/6I containing 50 mol% or less of a 6I component (6I: polyhexamethylene isophthalamide), nylon 6T/6I/66, and nylon 6T/6I/610; and copolymers such as polyhexamethylene terephthalamide (nylon 6T), polyhexamethylene isophthalamide (nylon 6I), poly(2-methylpentamethylene) terephthalamide (nylon M5T), poly(2-methylpentamethylene) isophthalamide (nylon M5I), nylon 6T/6I, and nylon 6T/M5T. In addition, copolymer nylon such as amorphous nylon may also be used, and examples of the amorphous nylon may include a polycondensate of terephthalic acid and trimethylhexamethylenediamine.

Further examples of the polyamide-based resin may include a ring-opening polymerization product of a cyclic lactam, a polycondensate of an aminocarboxylic acid, and a copolymer formed of those components, specifically, aliphatic polyamide resins such as nylon 6, poly-ω-undecanamide (nylon 11), and poly-ω-dodecanamide (nylon 12) and copolymers thereof, and a copolymer with a polyamide formed of a diamine and a dicarboxylic acid, specifically, nylon 6T/6, nylon 6T/11, nylon 6T/12, nylon 6T/6I/12, nylon 6T/6I/610/12 and mixtures thereof.

### <Component (B)>

An ABS resin as component (B) is preferably a resin produced by an emulsion polymerization method or a bulk polymerization method, preferably a resin produced by a method involving coagulating a polymer dispersed in water after emulsion polymerization with an inorganic salt or by the bulk polymerization method.

### <Components (C)>

Components (C) are two or more kinds selected from a carboxylic acid-modified AS resin, a carboxylic acid-modified acrylic resin, a carboxylic acid-modified maleimide resin, a carboxylic acid-modified ABS resin, and a carboxylic acid-modified SEBS resin.

A combination of the carboxylic acid-modified AS resin and one or two or more kinds of resins selected from the remainder, and a combination of the carboxylic acid-modified maleimide resin and one or two or more kinds of resins selected from the remainder (provided that the carboxylic acid-modified AS resin is excluded) can be given as examples of the combination of components (C).

Components (C) are preferably a combination of the following component (C-1) and the following component (C-2) or a combination of component (C-1), component (C-2), and the following component (C-3).

The carboxylic acid-modified AS resin as component (C-1) is a known resin, and resins each obtained by bonding a carboxylic acid selected from, for example, acrylic acid, methacrylic acid, and maleic acid to a terminal of an AS resin can be given as examples of the resin.

Given as examples of the carboxylic acid-modified maleimide resin as component (C-2) obtained from a monomer mixture containing 40 mass% or more of a maleimide-based monomer can be resins each obtained by bonding a carboxylic acid selected from, for example, acrylic acid, methacrylic acid, and maleic acid to a terminal of a maleimide resin obtained from the monomer mixture.

Examples of the monomer mixture may include a mixture formed of a maleimide-based monomer selected from maleimide, N-methylmaleimide, N-ethylmaleimide, N-propylmaleimide, N-isopropylmaleimide, N-cyclohexylmaleimide, N-phenylmaleimide, N-toluylmaleimide, N-xylylmaleimide, N-naphthylmaleimide, N-t-butylmaleimide, N-o-chlorophenylmaleimide, and N-o-methoxyphenylmaleimide, and another monomer unit copolymerizable with the monomer.

Examples of the another monomer copolymerizable with the maleimide-based monomer may include styrene and maleic anhydride.

The content of the maleimide-based monomer unit in component (C-2) is 40 mass% or more, preferably 45 mass% or more, more preferably 50 mass% or more.

A value for the melt flow rate of component (C-2) at 265°C per 10 kg is preferably 0.1 to 5, more preferably 0.1 to 3.5, still more preferably 0.1 to 2.5.

The carboxylic acid-modified ABS resin as component (C-3) is a known resin, and resins each obtained by bonding a carboxylic acid selected from, for example, acrylic acid, methacrylic acid, and maleic acid to a terminal of an ABS resin can be given as examples of the resin.

The contents of components (A), (B), and (C) in the composition of the present invention are as described below.

The content of component (A) is 35 to 90 mass%, preferably 48 to 80 mass%, more preferably 52 to 80 mass%, still more preferably 57 to 78 mass%. The content of component (A) is preferably larger than the content of component (B).

The content of component (B) is 9 to 50 mass%, preferably 15 to 50 mass%, more preferably 15 to 42 mass%, still more preferably 15 to 35 mass%. The content of component (B) is preferably smaller than the content of component (A).

The total content of component (C) is 1 to 25 mass%, preferably 5 to 20 mass%, more preferably 5 to 18 mass%, still more preferably 7 to 18 mass%.

When a combination of component (C-1) and component (C-2) is incorporated as components (C), component (C-1) and component (C-2) are set to satisfy the following ratio to such an extent that their total content becomes the above-mentioned content.

Amass ratio ((C-1)/(C-2)) of component (C-1) to component (C-2) is 1/10 to 10/1, preferably 1/10 to 5/1, more preferably 1/10 to 2/1.

When a combination of component (C-1), component (C-2), and component (C-3) is incorporated as components (C), component (C-1), component (C-2), and component (C-3) are set to satisfy the following ratio to such an extent that their total content becomes the above-mentioned content.

Amass ratio ((C-2)/(C-3)) of component (C-2) to component (C-3) is 1/10 to 10/1, preferably 1/10 to 5/1, more preferably 1/10 to 2/1.

A mass ratio (C-1)/((C-2) + (C-3)) of the contents of (C-1) to (C-3) is 1/10 to 10/1, preferably 1/10 to 5/1, more preferably 1/10 to 2/1.

### <Component (D)>

Glass fibers or carbon fibers can be used alone as component (D), or the glass fibers and the carbon fibers can be used in combination.

Glass fibers formed of an E-glass and a D-glass can be given as examples of the glass fibers, and fibers formed of, for example, polyacrylonitrile-, pitch-, and rayon-based materials can be given as examples of the carbon fibers.

The glass fibers or the carbon fibers as component (D) are each preferably such that a ratio (major axis length/minor axis length) of a major axis length to a minor axis length falls within the range of 1.0 to 5.0, more preferably such that the ratio falls within the range of 1.2 to 5.0, still more preferably such that the ratio falls within the range of 2.0 to5.0, particularly preferably such that the ratio falls within the range of 3.0 to 5.0. It should be noted that the case where the ratio of the major axis length to the minor axis length is 1.0 means that a section is of a circular shape.

Although each of the glass fibers or the carbon fibers as component (D) may be such that a sectional shape in its width direction is a circular shape (GF-1 or 2 illustrated in FIG. 1), an elliptical shape, a polygon (such as an isosceles triangle, an equilateral triangle, a rectangle, a square, a hexagon, a trapezoid, or a rhombus), or the polygon only a corner of which is rounded, the sectional shape is particularly preferably a substantially cocoon shape (GF-3 illustrated in FIG. 1) or a substantially oblong shape (GF-4 illustrated in FIG. 1).

It should be noted that the term "substantially cocoon shape" means that the shape may be bilaterally symmetrical or may be asymmetrical (provided that the shape must be approximate) when viewed from two central axes in the lengthwise direction and the width direction, and the term "substantially oblong shape" means that the shape may be bilaterally symmetrical (provided that the shape must be approximate) or may be asymmetrical when viewed from two central axes in the lengthwise direction and the width direction.

The content of component (D) is 2 to 80 parts by mass, preferably 2 to 50 parts by mass, more preferably 2 to 25 parts by mass with respect to 100 parts by mass of the total of components (A), (B), and (C).

The composition of the present invention may contain, as necessary, a UV absorbent, a photostabilizer, an antistatic, an antioxidant, a lubricant, a plasticizer, a flame retardant, a release agent, and the like within such a range that the above-mentioned problem may be solved.

### Examples

### Examples and Comparative Examples

The respective components shown in Tables 1 to 1-2 were melted and kneaded with a twin extruder TEX30α (having a screw diameter of 32 mm) manufactured by The Japan Steel Works, Ltd. at 250°C, and then the kneaded product was extruded into a strand shape. After that, the resultant was cooled and cut. Thus, a pellet was obtained (number of revolutions of a screw: 400 rpm, loading amount: 50 kg/hour). Glass fibers were loaded in midstream with a side feeder. A composition of each example was tested for the following respective items. Tables 1 to 1-2 show the results.

### (1) Bending modulus

Measurement was performed in conformity with ISO178.

### (2) Notched Charpy impact test

Measurement was performed in conformity with ISO179/1eA.

### (3) HDT

Measurement was performed in conformity with ISO75.

### (4) Evaluation for coatability

The surface of a flat plate (100×100×2 mm) produced by injection molding was degreased with isopropanol, and was then coated with a two-pack acrylic urethane paint (Strone 100 manufactured by Cashew Co., Ltd.), followed by drying (80°C×2 hours). After that, an evaluation for coatability was performed by counting the number of remaining squares out of 100 squares according to the cross cut test method of JIS K5400-1990. The indicator "o" means that 100 squares out of the 100 squares remained.

### (5) Warpage

A flat plate as a result of injection molding into a size measuring 120 mm long by 120 mm wide by 2 mm thick was mounted on a flat, horizontal plane so that its central portion contacted the horizontal plane. At this time, each corner portion floats when warpage is occurring.

Next, each corner portion was fixed to the horizontal plane, and then the height (lifting height) of the corner portion diagonally opposite to the fixed corner portion with respect to the horizontal plane was measured. The lifting heights of the four corner portions were similarly measured, and then the highest lifting height was evaluated by the following four criteria.
⊚: Less than 5 mm
○: 5 mm or more and less than 8 mm
Δ: 8 mm or more and less than 10 mm
×: 10 mm or more

**Table 1**

| | | | Example | | | | | | | |
|---|---|---|---|---|---|---|---|---|---|---|
| | | | 1 | 2 | 3 | 4 | 5 | 6 | 7 | 8 |
| (A) | | PA6-1 | 60 | 60 | 60 | 48 | 52 | 60 | 60 | 60 |
| | | PA6-2 | | | | | | | | |
| (B) | | ABS-1 | 30 | 30 | 30 | 42 | 38 | 30 | 30 | |
| | | ABS-2 | | | | | | | | 30 |
| | | ABS-3 | | | | | | | | |
| (C) | (C-1) | Acid-modified AS | 5 | 5 | 5 | 5 | 5 | 5 | 5 | 5 |
| | (C-2) | Acid-modified maleimide resin 1 | 5 | | | 5 | 5 | | | 5 |
| | | Acid-modified maleimide resin 2 | | 5 | | | | | | |
| | | Acid-modified maleimide resin 3 | | | 5 | | | | | |
| | (C-3) | Acid-modified ABS | | | | | | | | |
| | (C-4) | Acid-modified acrylic resin | | | | | | 5 | | |
| | (C-5) | Acid-modified SEBS resin | | | | | | | 5 | |
| (D) | | GF-1 | 25 | 25 | 25 | 25 | 25 | 25 | 25 | 25 |
| | | GF-2 | | | | | | | | |
| | | GF-3 | | | | | | | | |
| | | GF-4 | | | | | | | | |
| | | CF | | | | | | | | |
| Others | | Antioxidant 1 | 0.2 | 0.2 | 0.2 | 0.2 | 0.2 | 0.2 | 0.2 | 0.2 |
| | | Antioxidant 2 | | | | | | | | |
| | | Antioxidant 3 | 0.2 | 0.2 | 0.2 | 0.2 | 0.2 | 0.2 | 0.2 | 0.2 |
| | | Lubricant 1 | 0.5 | 0.5 | 0.5 | 0.5 | 0.5 | 0.5 | 0.5 | 0.5 |
| | | Lubricant 2 | | | | | | | | |
| Bending modulus (MPa) | | | 5300 | 5300 | 5300 | 5300 | 5300 | 5300 | 4900 | 5300 |
| Charpy (kJ/m²) | | | 13 | 12 | 11 | 11 | 11 | 10 | 14 | 11 |
| High-pressure HDT (1.8MPa)(°C) | | | 170 | 170 | 170 | 145 | 155 | 170 | 160 | 160 |
| Low-pressure HDT (0.45MPa) (°C) | | | 210 | 210 | 210 | 210 | 210 | 210 | 210 | 210 |
| Coatability | | | ○ | ○ | ○ | ○ | ○ | ○ | ○ | ○ |
| Warpage | | | Δ | Δ | Δ | Δ | Δ | Δ | Δ | Δ |

**Table 1-1**

| | | | Example | | | | | | | |
|---|---|---|---|---|---|---|---|---|---|---|
| | | | 9 | 10 | 11 | 12 | 13 | 14 | 15 | 16 |
| (A) | | PA6-1 | 60 | 60 | 60 | 60 | | 60 | 50 | 70 |
| | | PA6-2 | | | | | 60 | | | |
| (B) | | ABS-1 | | | 25 | 20 | | 25 | 40 | 20 |
| | | ABS-2 | | | | | 25 | | | |
| | | ABS-3 | 25 | 25 | 5 | 10 | | | | |
| (C) | (C-1) | Acid-modified AS | 5 | | 5 | 5 | 5 | 5 | 5 | 5 |
| | (C-2) | Acid-modified maleimide resin 1 | | 5 | 5 | 5 | | 5 | 5 | 5 |
| | | Acid-modified maleimide resin 2 | | | | | | | | |
| | | Acid-modified maleimide resin 3 | | | | | | | | |
| | (C-3) | Acid-modified ABS | | | | | 10 | 5 | | |
| | (C-4) | Acid-modified acrylic resin | | | | | | | | |
| | (C-5) | Acid-modified SEBS resin | 10 | 10 | | | | | | |
| (D) | | GF-1 | 25 | 25 | 25 | 25 | | 25 | 25 | 25 |
| | | GF-2 | | | | | 25 | | | |
| | | GF-3 | | | | | | | | |
| | | GF-4 | | | | | | | | |
| | | CF | | | | | | | | |
| Others | | Antioxidant 1 | 0.2 | 0.2 | 0.2 | 0.2 | | 0.2 | 0.2 | 0.2 |
| | | Antioxidant 2 | | | | | 0.2 | | | |
| | | Antioxidant 3 | 0.2 | 0.2 | 0.2 | 0.2 | 0.2 | 0.2 | 0.2 | 0.2 |
| | | Lubricant 1 | 0.5 | 0.5 | 0.5 | 0.5 | | 0.5 | 0.5 | 0.5 |
| | | Lubricant 2 | | | | | 0.5 | | | |
| Bending modulus (MPa) | | | 4900 | 4900 | 5500 | 5600 | 5300 | 5500 | 5200 | 5800 |
| Charpy (kJ/m²) | | | 13 | 13 | 12 | 11 | 12 | 13 | 13 | 12 |
| High-pressure HDT (1.8MPa) (°C) | | | 160 | 160 | 170 | 170 | 170 | 170 | 150 | 190 |
| Low-pressure HDT (0.45MPa) (°C) | | | 210 | 210 | 210 | 210 | 210 | 210 | 180 | 210 |
| Coatability | | | ○ | ○ | ○ | ○ | ○ | ○ | ○ | ○ |
| Warpage | | | Δ | Δ | Δ | Δ | Δ | Δ | Δ | Δ |

**Table 1-2**

| | | | Examples | | | Comparative Example | | | | |
|---|---|---|---|---|---|---|---|---|---|---|
| | | | 17 | 18 | 19 | 1 | 2 | 3 | 4 | 5 |
| (A) | | PA6-1 | 60 | 60 | 60 | 30 | 60 | 60 | 90 | 60 |
| | | PA6-2 | | | | | | | | |
| (B) | | ABS-1 | 30 | 30 | 30 | | 35 | 35 | | 30 |
| | | ABS-2 | | | | | | | | |
| | | ABS-3 | | | | 60 | | | | |
| (C) | (C-1) | Acid-modified AS | 5 | 5 | 5 | 5 | 5 | | 5 | 5 |
| | (C-2) | Acid-modified maleimide resin 1 | 5 | 5 | 5 | 5 | | 5 | 5 | 5 |
| | | Acid-modified maleimide resin 2 | | | | | | | | |
| | | Acid-modified maleimide resin 3 | | | | | | | | |
| | (C-3) | Acid-modified ABS | | | | | | | | |
| | (C-4) | Acid-modified acrylic resin | | | | | | | | |
| | (C-5) | Acid-modified SEBS resin | | | | | | | | |
| (D) | | GF-1 | | | | 25 | 25 | 25 | 25 | |
| | | GF-2 | | | | | | | | |
| | | GF-3 | | 25 | | | | | | |
| | | GF-4 | | | 25 | | | | | |
| | | CF | 5 | | | | | | | |
| Others | | Antioxidant 1 | 0.2 | 0.2 | 0.2 | 0.2 | 0.2 | 0.2 | 0.2 | 0.2 |
| | | Antioxidant 2 | | | | | | | | |
| | | Antioxidant 3 | 0.2 | 0.2 | 0.2 | 0.2 | 0.2 | 0.2 | 0.2 | 0.2 |
| | | Lubricant 1 | 0.5 | 0.5 | 0.5 | 0.5 | 0.5 | 0.5 | 0.5 | 0.5 |
| | | Lubricant 2 | | | | | | | | |
| Bending modulus (MPa) | | | 4400 | 5400 | 5600 | 2000 | 5200 | 5300 | 5800 | 1800 |
| Charpy (kJ/m²) | | | 11 | 14 | 15 | 10 | 5 | 13 | 10 | 45 |
| High-pressure HDT (1.8MPa) (°C) | | | 120 | 170 | 170 | 85 | 170 | 170 | 190 | 70 |
| Low-pressure HDT (0.45MPa) (°C) | | | 200 | 200 | 200 | 90 | 210 | 210 | 210 | 100 |
| Coatability | | | ○ | ○ | ○ | ○ | ○ | 50/100 | 30/100 | ○ |
| Warpage | | | Δ | ○ | ⊚ | ○ | Δ | Δ | × | ○ |

As is apparent from comparison between any one of Examples 1 to 15 each containing two or three kinds of components (C) and Comparative Example 2 containing only one kind of component (C) (only component (C-1)), a difference in Charpy impact strength was salient. Similarly, as is apparent from comparison between any one of Examples 1 to 15 and Comparative Example 3 containing only one kind of component (C) (only component (C-2)), a difference in coatability was salient.

The high-pressure HDT (1.8 MPa) increases in the following order: Example 4 (containing 48 mass% of the PA) <Example 5 (containing 52 mass% of the PA) <Example 1 (containing 60 mass% of the PA) <Example 16 (containing 70 mass% of the PA). Accordingly, the susceptibility of an example to a thermal influence caused by the drying after the coating reduces as its high-pressure HDT increases. In addition, it becomes possible to dry the example at a higher temperature, which enables the shortening of its drying time.

Examples 18 and 19 were each an example in which glass fibers each having a ratio "major axis length/minor axis length" in excess of 1 were used as the glass fibers, and the examples each had a particularly high Charpy impact strength and small warpage.

### <Component (A)>

PA6-1: polyamide 6: Ube Industries, Ltd., UBE Nylon 1011FB
PA6-2: polyamide 6: Unitika Ltd., Unitika Nylon A1020BRL

### <Component (B)>

ABS-1: emulsion-polymerized ABS resin (salt-coagulated) (30 mass% of styrene, 10 mass% of acrylonitrile, 60 mass% of butadiene rubber)
ABS-2: emulsion-polymerized ABS resin (acid-coagulated) (30 mass% of styrene, 10 mass% of acrylonitrile, 60 mass% of butadiene rubber)
ABS-3: bulk-polymerized ABS resin (NIPPON A&L INC., SANTAC ST-55B)

### <Component (C)>

### Component (C-1)

Acid-modifiedAS: 71 mass% of styrene, 24mass%ofacrylonitrile, 5 mass% of methacrylic acid

### Component (C-2)

Acid-modifiedmaleimide resin 1: copolymer of 47 mass% of styrene, 51 mass% of N-phenylmaleimide, and 2 mass% of maleic anhydride, glass transition temperature: 196°C, weight-average molecular weight: 120,000, melt flow rate at 265°C per 10 kg: 4

Acid-modified maleimide resin 2: copolymer of 47 mass% of styrene, 51 mass% of N-phenylmaleimide, and 2 mass% of maleic anhydride, glass transition temperature: 196°C, weight-average molecular weight: 131,000, melt flow rate at 265°C per 10 kg: 3

Acid-modified maleimide resin 3 : copolymer of 47 mass% of styrene, 51 mass% of N-phenylmaleimide, and 2 mass% of maleic anhydride, glass transition temperature: 196°C, weight-average molecular weight: 147,000, melt flow rate at 265°C per 10 kg: 2

### Component (C-3)

Acid-modifiedABS: 41 mass% of styrene, 14 mass%of acrylonitrile, 40 mass% of butadiene rubber, 5 mass% of methacrylic acid

### Other components (C)

Acid-modified acrylic resin: Asahi Kasei Chemicals Corporation, Delpet™ 980N

Acid-modified SEBS resin: Asahi Kasei Chemicals Corporation, Tuftec™ M1943

### <Component (D)>

GF-1: glass fiber, ECS-03-T-120 manufactured by Nippon Electric Glass Co., Ltd., major axis length/minor axis length=1.0 (having a circular section) (see FIG. 1)
GF-2: glass fiber, RES03-TP27 manufactured by Owens Corning Japan Ltd., major axis length/minor axis length=1.0 (having a circular section) (see FIG. 1)
GF-3: glass fiber, Nitto Boseki Co., Ltd., CSH 3PA-870S, major axis length/minor axis length=2.0 (having a substantially cocoon-shaped section) (see FIG. 1)
GF-4: glass fiber 3, Nitto Boseki Co. , Ltd. , CSG 3PA-820S, major axis length/minor axis length=4.0 (having a substantially oblong-shaped section) (see FIG. 1)
CF-1: carbon fiber: HTA-C6-UEL1 manufactured by TOHO TENAX Co., Ltd.

### <Other components>

Antioxidant 1: phosphorus-based antioxidant, IRGAFOS®168 manufactured by Ciba Japan K. K.
Antioxidant 2: sulfur-based antioxidant, Sumilizer®TPS manufactured by Sumitomo Chemical Industry Co., Ltd.
Antioxidant 3: phenolic antioxidant, IRGANOX®1010 manufactured by Ciba Japan K. K.
Lubricant 1: calcium stearate, SC-PG manufactured by Sakai Chemical Industry Co., Ltd.
Lubricant 2: ethylenebisstearamide, ALFLOW H50S manufactured by NOF CORPORATION

The resin composition for use in a coated molded article of the present invention can be utilized as a material for molding, for example, the interior parts and exterior parts of an automobile.

## Claims

1. A resin composition for use in a coated molded article, comprising:
35 to 90 mass% of (A) a polyamide resin;
9 to 50 mass% of (B) an ABS resin;
1 to 25 mass% in total of (C) two or more kinds selected from the group consisting of a carboxylic acid-modified AS resin, a carboxylic acid-modified acrylic resin, a carboxylic acid-modified maleimide resin, a carboxylic acid-modified ABS resin and a carboxylic acid-modified SEBS resin; and
2 to 80 parts by mass of (D) glass fiber and/or carbon fiber with respect to 100 parts by mass of the total of components (A), (B), and (C).

2. The resin composition according to claim 1, wherein the composition comprises 1 to 25 mass% in total of (C-1) a carboxylic acid-modified AS resin and (C-2) a carboxylic acid-modified maleimide resin obtainable from a monomer mixture comprising 40 mass% or more of a maleimide-based monomer as component (C).

3. The resin composition according to claim 1, wherein the composition comprises 1 to 25 mass% in total of (C-1) a carboxylic acid-modified AS resin, (C-2) a carboxylic acid-modified maleimide resin obtainable from a monomer mixture comprising 40 mass% or more of a maleimide-based monomer, and (C-3) a carboxylic acid-modified ABS resin as component (C).

4. The resin composition for use in a coated molded article according to any one of claims 1 to 3, wherein the glass fiber or the carbon fiber as component (D) each has a ratio (major axis length/minor axis length) of a major axis length of a section in the width direction thereof to a minor axis length thereof within the range of 1.2 to 5.0.

5. The resin composition for use in a coated molded article according to any one of claims 1 to 3, wherein the glass fiber or the carbon fiber as component (D) each have a ratio (major axis length/minor axis length) of a major axis length of a section in the width direction thereof to a minor axis length thereof within the range of 2.0 to 5.0.

6. The resin composition for use in a coated molded article according to any one of claims 1 to 5, wherein the glass fiber or the carbon fiber as component (D) has a sectional shape in the width direction thereof of a cocoon shape or of a oblong shape.

## Patentansprüche

1. Harzzusammensetzung zur Verwendung in einem beschichteten geformten Gegenstand, umfassend:
35 bis 90 Masse-% von (A) einem Polyamidharz;
9 bis 50 Masse-% von (B) einem ABS-Harz;
insgesamt 1 bis 25 Masse-% von (C) zwei oder mehreren Arten, ausgewählt aus der Gruppe bestehend aus einem carbonsäuremodifizierten AS-Harz, einem carbonsäuremodifizierten Acrylharz, einem carbonsäuremodifizierten Maleimidharz, einem carbonsäuremodifizierten ABS-Harz und einem carbonsäuremodifizierten SEBS-Harz; und
2 bis 80 Masseteile von (D) Glasfaser und/oder Kohlefaser in Bezug auf 100 Masseteile der gesamten der Komponenten (A), (B) und (C).

2. Harzzusammensetzung nach Anspruch 1, wobei die Zusammensetzung insgesamt 1 bis 25 Masse-% von (C-1) einem carbonsäuremodifizierten AS-Harz und (C-2) einem carbonsäuremodifizierten Maleimidharz umfasst, erhältlich aus einer Monomermischung, umfassend 40 Massen-% oder mehr eines Monomers auf Maleinimidbasis als Komponente (C).

3. Harzzusammensetzung nach Anspruch 1, wobei die Zusammensetzung insgesamt 1 bis 25 Masse-% von (C-1) einem carbonsäuremodifizierten AS-Harz, (C-2) einem carbonsäuremodifizierten Maleimidharz, erhältlich aus einer Monomermischung, umfassend 40 Masse-% oder mehr eines Monomers auf Basis von Maleimid, und (C-3) einem carbonsäuremodifizierten ABS-Harz als Komponente (C) umfasst.

4. Harzzusammensetzung zur Verwendung in einem beschichteten geformten Gegenstand nach einem der Ansprüche 1 bis 3, wobei die Glasfaser oder die Kohlefaser als Komponente (D) jeweils ein Verhältnis (Hauptachsenlänge/Nebenachsenlänge) einer Hauptachsenlänge eines Abschnitts in deren Breitenrichtung zu der Nebenachsenlänge davon im Bereich von 1,2 bis 5,0 aufweist.

5. Harzzusammensetzung zur Verwendung in einem beschichteten geformten Gegenstand nach einem der Ansprüche 1 bis 3, wobei die Glasfaser oder die Kohlefaser als Komponente (D) jeweils ein Verhältnis (Hauptachsenlänge/Nebenachsenlänge) einer Hauptachsenlänge eines Abschnitts in deren Breitenrichtung zu einer Nebenachsenlänge davon im Bereich von 2,0 bis 5,0 aufweist.

6. Harzzusammensetzung zur Verwendung in einem beschichteten geformten Gegenstand nach einem der Ansprüche 1 bis 5, wobei die Glasfaser oder die Kohlefaser als Komponente (D) eine Querschnittsform in deren Breitenrichtung mit einer im Wesentlichen Kokonform oder einer im Wesentlichen länglichen Form aufweist.

## Revendications

1. Composition de résine utilisable dans un article moulé enrobé, comprenant :
de 35 à 90 % en masse de (A) une résine polyamide ;
de 9 à 50 % en masse de (B) une résine ABS ;
de 1 à 25 % en masse au total de (C) deux types de constituant ou plus choisis dans le groupe constitué par une résine AS modifiée par un acide carboxylique, une résine acrylique modifiée par un acide carboxylique, une résine maléimide modifiée par un acide carboxylique, une résine ABS modifiée par un acide carboxylique et une résine SEBS modifiée par un acide carboxylique ; et
2 à 80 parties en masse de (D) fibre de verre et/ou fibre de carbone pour 100 parties en masse du total des constituants (A), (B) et (C).

2. Composition de résine selon la revendication 1, la composition comprenant de 1 à 25 % en masse au total de (C-1) une résine AS modifiée par un acide carboxylique et (C-2) une résine maléimide modifiée par un acide carboxylique pouvant être obtenue à partir d'un mélange de monomères comprenant 40 % en masse ou plus d'un monomère à base de maléimide en tant que constituant (C).

3. Composition de résine selon la revendication 1, la composition comprenant de 1 à 25 % en masse au total de (C-1) une résine AS modifiée par un acide carboxylique, (C-2) une résine maléimide modifiée par un acide carboxylique pouvant être obtenue à partir d'un mélange de monomères comprenant 40 % en masse ou plus d'un monomère à base de maléimide et (C-3) une résine ABS modifiée par un acide carboxylique en tant que constituant (C).

4. Composition de résine utilisable dans un article moulé enrobé selon l'une quelconque des revendications 1 à 3, dans laquelle la fibre de verre ou la fibre de carbone en tant que constituant (D) présente chacune un rapport (longueur d'axe majeur/longueur d'axe mineur) d'une longueur d'un axe majeur d'une section dans le sens largeur de celle-ci à une longueur d'axe mineur de celle-ci dans la fourchette de 1,2 à 5,0.

5. Composition de résine utilisable dans un article moulé enrobé selon l'une quelconque des revendications 1 à 3, dans laquelle la fibre de verre ou la fibre de carbone en tant que constituant (D) présentent chacune un rapport (longueur d'axe majeur/longueur d'axe mineur) d'une longueur d'un axe majeur d'une section dans le sens largeur de celle-ci à une longueur d'axe mineur de celle-ci dans la fourchette de 2,0 à 5,0.

6. Composition de résine utilisable dans un article moulé enrobé selon l'une quelconque des revendications 1 à 5, dans laquelle la fibre de verre ou la fibre de carbone en tant que constituant (D) présente une forme de section dans le sens largeur de celle-ci en forme de cocon ou de forme oblongue.
